# EUROPEAN PATENT APPLICATION

(11) **EP 4 656 332 A1**
(43) Date of publication of application: **03.12.2025**
(21) Application number: 24178419.8
(22) Date of filing: 28.05.2024
(51) Int. Cl.: B25J 5/00, B25J 13/08, B25J 19/00, B25J 19/02

(54) **ADVANCED AUTONOMOUS MOBILE ROBOT**

(71) Applicant: Stäubli WFT GmbH, 92237 Sulzbach-Rosenberg (DE)
(72) Inventor: JANNER, Daniel, 92237 SULZBACH-ROSENBERG (DE); OPELDUS, Thomas, 92224 AMBERG (DE); BOCQUET, Hubert, 74370 FILLIÈRES (FR); KREDLER, Cajetan, 92274 GEBENBACH (DE); GRAF, Peter, 93142 MAXHÜTTE-HAIDHOF (DE); DISTLER, Uwe Konrad, 91332 HEILIGENSTADT I. OFR. (DE); FOLGER, Stefan, 95448 BAYREUTH (DE); LORA, Julien, 95445 BAYREUTH (DE)
(74) Representative: Lavoix

(57) **Abstract**

The mobile robot (10) comprises a base module (12) including a sensor system for analyzing the environment, and a control unit for driving the mobile robot (10) as a function of information from the sensor system. The base module (12) comprises a lower plate (22) facing the ground and comprising at least three attachment points (42), each attachment point (42) being designed to connect with a respective wheel unit (44), each wheel unit (44) comprising at least one wheel (46). At least one of the wheel units (44) is a motorized wheel unit, which comprises at least one motor. The motors are controlled by the control unit as a function of information from the sensor system.

## Description

The present invention relates to an autonomous mobile robot (AMR). Such a mobile robot is able to displace itself by automatically avoiding obstacles.

Such a mobile robot can be used in any suitable application, for example in a pharmaceutical application. It should be noticed that a pharmaceutical application is subject to high requirements, in particular high cleanability requirements and high requirements in compacity since the mobile robot should be able to move within the footprint of human operators.

Human operators are usually performing a lot of different tasks in highly clean workshops but remain the highest source in term of contamination. For this reason, there is a big trend to substitute human operators with mobile robots carrying loads or manipulators.

Indeed, the mobile robot should be modular, in order to closely fit a wide range of applications. According to what kind of goods needs to be transferred from one place to another, the mobile robot may present dedicated carriages. It is also more and more required that the mobile robot also has means for self-loading of the goods such as robot arm. The mobile robot may alternatively presents a lifting upper surface. In addition, it may be advantageous to be able to group several mobile robots together to increase the load capacity or the load receiving surface area.

Besides, the pharmaceutical workshops are subject to very strict cleanliness standards, which require regular decontamination of equipment with very aggressive products such as hydrogen peroxide (H₂O₂). Thus, the mobile robot should allow and support frequent cleaning/decontaminating. To do this, exterior surfaces must be easily accessible and free of areas where cleaning products can accumulate.

Of course, the mobile robot should be perfectly sealed to prevent, on the one hand, aggressive products from penetrating inside and attacking electronic circuits for example and, on the other hand, particles contained inside from escaping and contaminating the environment.

Mobile robots are moving and may be a vector of contamination. Consequently, mobile robots should have horizontal surfaces facing upwards of the smallest possible area. To reduce contamination, human operator and moving equipment are submitted to top-down vertical air flows. The target is to force dust to go down and accumulate in dedicated location.

Thus, the invention is intended to provide a mobile robot addressing the technical problems of modularity and easy cleanability, with a high compactness.

To this end, the invention relates to a mobile robot comprising a base module including a sensor system for analyzing the environment, and a control unit for driving the mobile robot as a function of information from the sensor system, the modular mobile robot being characterized in that:
- the base module comprises a lower plate facing the ground and comprising at least three attachment points, each attachment point being designed to connect with a respective wheel unit, each wheel unit comprising at least one wheel,
- at least one of the wheel units is a motorized wheel unit which comprises at least one motor whose actuation causes the wheel to turn around a vertical axis and/or a horizontal axis,
- each motor is controlled by the control unit as a function of information from the sensor system.

Since the motors are in the wheel units and not in the base module, the base module is more compact and can be the same for every combination of wheel units. Thus, the mobile robot of the invention has a high modularity, and since it is compact, it is easy to clean and has small horizontal areas.

A mobile robot according to the invention may also comprise any of the following features, taken alone or in any technically possible combination.
- The base module has a lower surface that is flat, and the wheels of the wheel units are entirely situated under a plane comprising the lower surface of the base module.
- Each motorized wheel unit has a housing with a vertical part joining a horizontal part and a cover, defining together a closed inner space containing at least one motor, in particular a steering motor and/or a driving motor.
- Each motorized wheel unit is connected to the lower surface of the base module on one respective of the attachment points, this attachment point comprising a lip seal, which provides a seal between an annular surface of the lower plate and a circular edge of the vertical part of the motorized wheel unit.
- The lip seal comprises an annular body, which abuts against the annular surface of the lower plate and a lip extending externally from the annular body of the lip seal defining a concave external surface.
- Each motorized wheel unit has a wheel, which is connected at the extremity of the horizontal part and has a lip seal, which provides a seal between an annular surface of a side of the wheel and a circular edge of the horizontal part of the motorized wheel unit.
- The attachment points comprise a front attachment point, a rear left attachment point and a rear right attachment point located at the corners of a triangle, and each wheel unit is a steering and driving wheel units.
- The attachment points comprise a front attachment point, a rear left attachment point and a rear right attachment point located at the corners of a triangle, and the wheel units comprise a front wheel unit which is attached to the front attachment point, and a rear left wheel unit and a rear right wheel unit which are respectively attached to the rear left attachment point and the rear right attachment point, the front wheel unit being a free caster wheel unit and the rear left and right wheel units being driving wheel units.
- The free caster wheel unit comprises a shaft for rotating around a vertical axis with respect to the lower plate and fixed to a cup, the free caster wheel unit being connected to the lower surface of the base module on one of the attachment points, this attachment point comprising a lip seal which provides a seal between an annular surface of the lower plate and a circular edge of the cup.
- The attachment points comprise a front attachment point, a rear left attachment point and a rear right attachment point located at the corners of a triangle, and the wheel units comprise a front wheel unit which is attached to the front attachment point, and a rear left wheel unit and a rear right wheel unit which are respectively attached to the rear left attachment point and the rear right attachment point, the front wheel unit being a steering and driving wheel unit and the rear left wheel unit and the rear right wheel unit being fixed caster wheel units.
- The mobile robot comprises an add-on module used for completing specified working tasks and detachably connected to the upper surface of the base module by selectively activable mechanical connection devices.
- Each mechanical connection device comprises a plug extending above the upper surface of the base module and a socket part attached to the add-on module and able to lock and unlock the plug.
- In addition to mechanical connection devices, the add-on module and the base module are electrically connected by an electrical connection device comprising a connector integral with the base module and a complementary second connector integral with the add-on module.
- The lower plate is flat, and the base module comprises a flat upper plate and a main cover joining the upper plate to the lower plate, the main cover having an upper edge and a lower edge respectively abutting an outer outline of the upper plate and the lower plate against a respective flat seal whose lateral external edge follows an outer contour of the respective upper plate and lower plate.
- The lower edge of the main cover presents a horizontal first abutting surface which abuts a horizontal first portion of the outline of the lower plate and an internal vertical abutting surface which abuts a peripheral first vertical surface of the outline of the lower plate, the first horizontal portion of the outline of the lower plate extending between the peripheral first vertical surface of the outline of the lower plate and a peripheral second vertical surface of the outline of the lower plate, a second horizontal portion of the outline of the lower plate extending between the second vertical surface of the outline of the lower plate and the external vertical edge of the outline of the lower plate and facing a second abutting surface of the main cover which joins the first abutting surface of the main cover, a flat seal being housed in the groove defined by the second horizontal portion of the outline of the lower plate, the second peripheral vertical surface of the outline of the lower plate and the second abutting surface of the main cover.
- The upper edge of the main cover presents a horizontal first abutting surface which abuts a horizontal first portion of the outline of the upper plate and an internal vertical abutting surface which abuts a peripheral first vertical surface of the outline of the upper plate, the first horizontal portion of the outline of the upper plate extending between the peripheral first vertical surface of the outline of the upper plate and a peripheral second vertical surface of the outline of the upper plate, a second horizontal portion of the outline of the upper plate extending between the second vertical surface of the outline of the lower plate and the external vertical edge of the outline of the upper plate and facing a second abutting surface of the main cover which joins the first abutting surface of the main cover, a flat seal being housed in the groove defined by the second horizontal portion of the outline of the upper plate, the second peripheral vertical surface of the outline of the upper plate and the second abutting surface of the main cover.
- Each second abutting surface of the main cover is inclined with respect to corresponding second horizontal portion of the outline of the corresponding plate forming an angle which is chosen so that the distance between the second horizontal portion of the outline of the corresponding plate and the second abutting surface of the main cover decreases from the second vertical surface of the outline of the corresponding plate to the external vertical edge of the outline of the corresponding plate.
- The main cover of the base module is made from a mixture of natural materials, acrylic or polyester resins and pigments.
- The lower and upper plates each has a trapezoidal outline having a front side parallel to a rear side of greater length, a left side joining two ends of the front and rear sides and a symmetrical right side.
- The upper plate vertical projection is comprised in the outline of the lower plate and the cover presents a substantially vertical draft.
- The lower plate the upper plate and the main cover of the base module define an inner volume which contains: - inductive charging means which allow the charging of a battery though the main cover, - radar sensor systems for a 360°safety cover, - a bidimensional Navigation LiDAR Sensor sensing environment through windows of the main cover, - at least one magnetic switch which is placed close to the cover with an indication readable from the outside.

Several aspects and advantages of the invention will be enlightened in the following disclosure, given only as a non-limitative example and made in respect to attached drawings, in which:
Figure 1 is a side view of a mobile robot according to a first embodiment of the invention,
Figure 2 is a perspective view of the mobile robot of figure 1, separated into modules, which are a base module, and two possible add-on modules that are a platform add-on module and a robot arm add-on module,
Figure 3 is a perspective front view of the base module of figures 1 and 2,
Figure 4 is a perspective rear view of the base module of figure 3,
Figure 5 is a similar view as Figure 3, of the inside of the base module,
Figure 6 is a partial cross section of the base module of Figure 3,
Figure 7 is a first detail view of the partial cross section VII of Figure 6,
Figure 8 is a second detail view of the partial cross section VIII of Figure 6,
Figure 9 is a partial cross section of Figure 3, showing a magnetic switch,
Figure 10 is a view from below of the base module of figure 3,
Figure 11 is an exploded view of a wheel unit equipping the base module of Figure 3,
Figure 12 is a cross section of a wheel unit equipping the base module of Figure 3,
Figure 13 is a cross section of a connecting part of the base module of Figure 2 with an add-on module of Figure 2,
Figure 14 is an exploded view of electrical connection means equipping the base module of Figure 2 and an add-on module of Figure 2,
Figure 15 is a similar view as Figure 10 of a base module according to a second embodiment of the invention,
Figure 16 is a cross section of a wheel unit equipping the base module of Figure 15, and
Figure 17 is a similar view as Figure 10 of a base module according to a third embodiment of the invention.

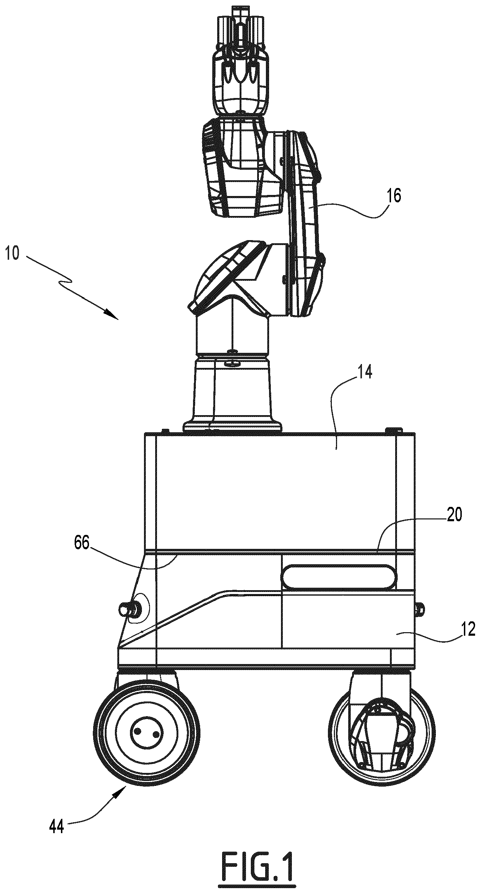

A modular mobile robot 10 according to a first embodiment of the invention is shown on Figure 1.

The modular mobile robot 10 comprises a base module 12, and an add-on module 14 arranged on the base module 12. In the example of Figure 1, the add-on module 14 comprises a robot arm 16.

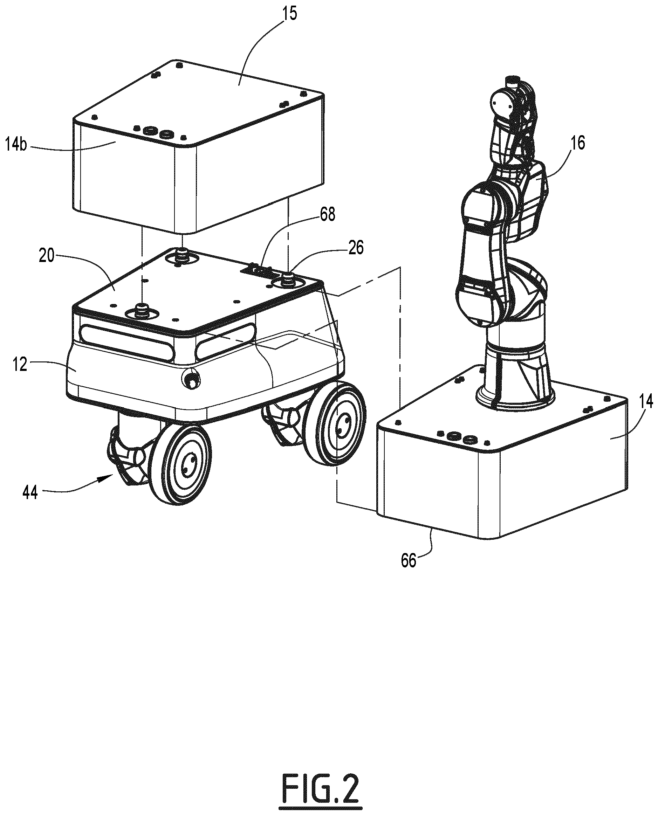

As shown on Figure 2, the modular mobile robot 10 may comprise an alternative add-on module 14', forming a single basket having an upper plane surface 15 for receiving parts. The base module 12 can receive the add-on module 14 or the alternative add-on module 14', or any possible other add-on module.

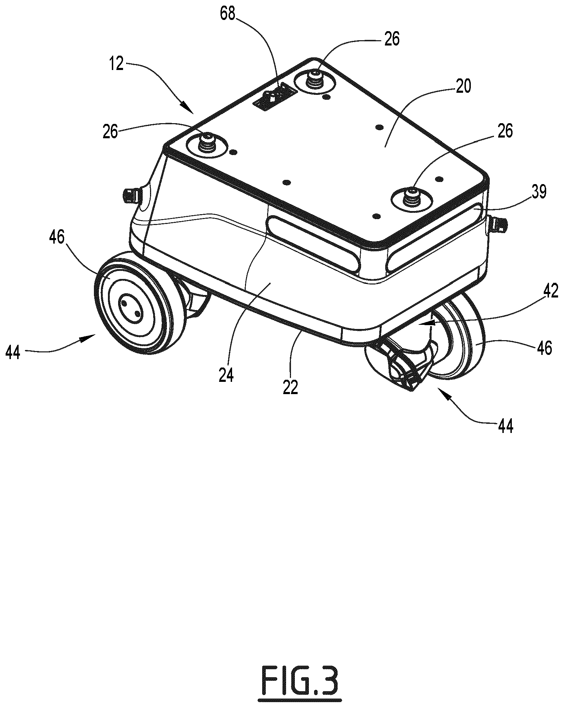

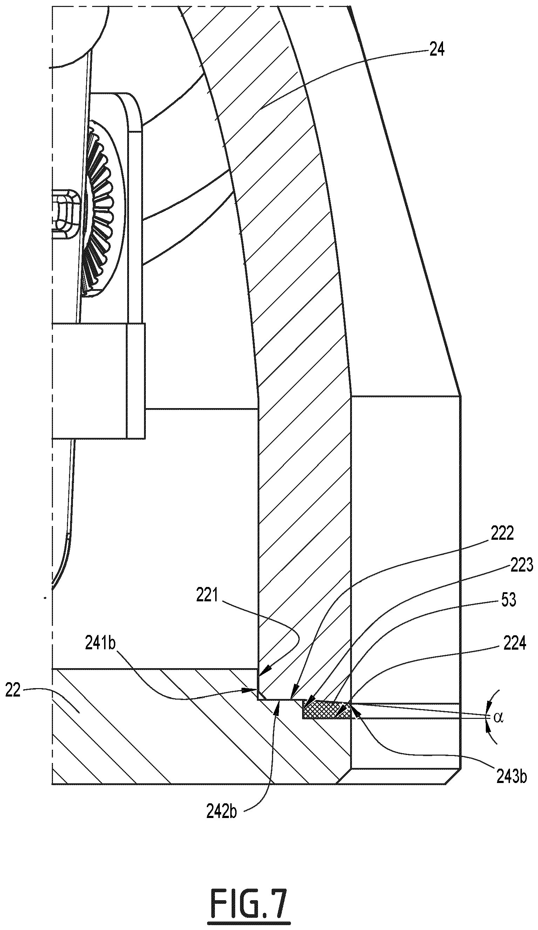

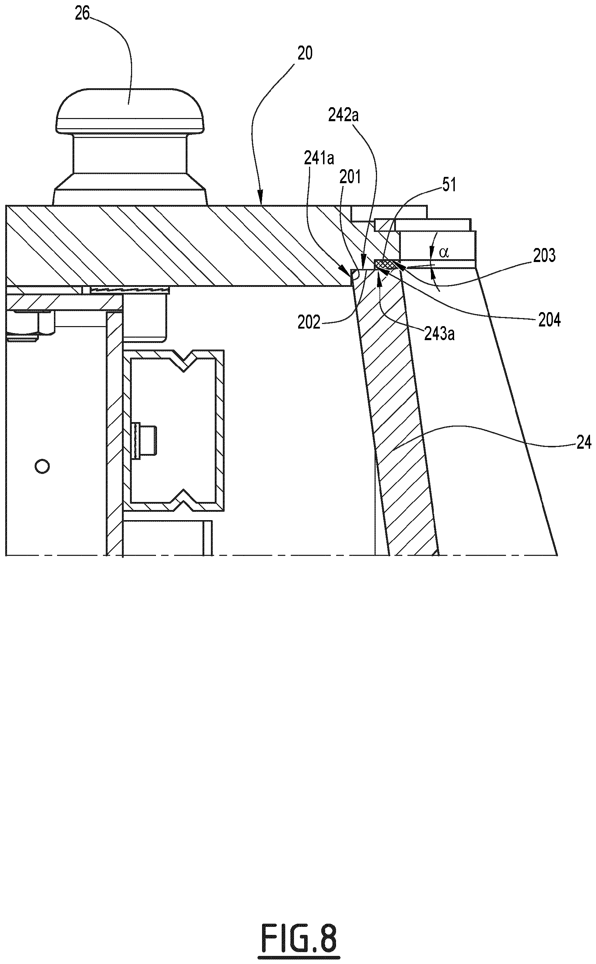

The base module 12 will be disclosed with more details in reference to Figures 3 to 14.

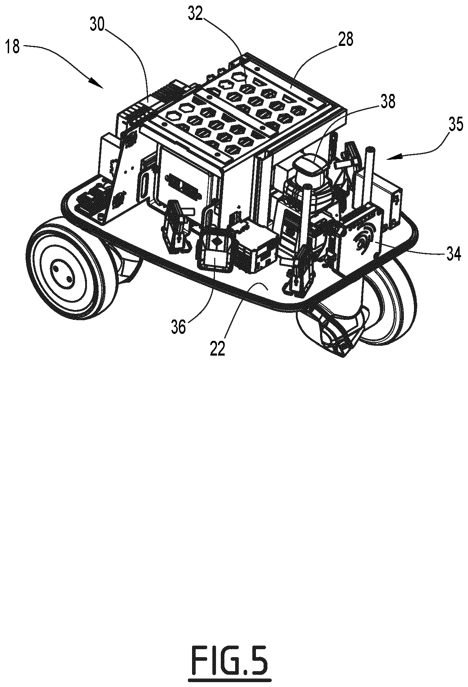

The base module 12 comprises a chassis 18 (shown on Figure 5) to which an upper plate 20 and a lower plate 22 are fixed. The upper plate 20 defines an upper surface of the base module 12, and the lower plate 22 defines a lower surface of the base module 12.

Preferentially, the lower 22 and upper 20 plates have a substantially trapezoidal outline having a front edge parallel to a rear edge of greater length, a left edge joining two ends of the front and rear edges and a symmetrical right edge. The trapezoidal outline optimizes encumbrance. In particular, it permits to design a compact hexagonal charging station with six simultaneous charging mobile robots.

The lower surface of the base module 12 faces the ground and is flat. This allows an easy cleanability of this lower surface.

The upper surface of the upper plate 20 and the lower surface of the lower plate 22 are intended to be in contact with the external environment. In order to improve their cleanability, these upper surface and lower surface are polished so that the surface roughness is less than 0.8 µm.

The upper plate 20 and the lower plate 22 are preferentially made of stainless steel, for example of 316L steel (1.4404). The stainless steel has high resistance to aggressive cleaning products.

The base module 12 comprises a peripheral main cover 24 extending from the upper plate 20 to the lower plate 22.

The upper plate 20 comprises three fixation plugs 26 located at the corners of a triangle. Two of the fixation plugs 26 are arranged near the rear edge of the upper plate 20, and one of the fixation plugs 26 is arranged near the front edge of the upper plate 20. These fixation plugs 26 are intended to attach the add-on module 14 to the base module 12, as it will be disclosed later.

The chassis 18 includes a casing 28 made of a folded sheet metal frame, on which a control unit 30 is fixed. The casing 28 defines an interior volume in which a battery 32 is housed.

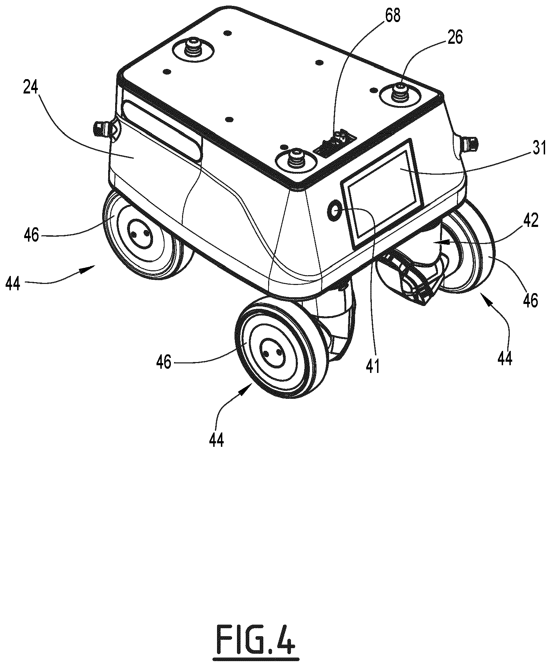

The control unit 30 is intended to automatically control the whole mobile robot 10. The functioning of such a control unit 30 is known. The control unit 30 preferentially comprises a touch screen 31 (shown on Figure 4) accessible from the outside of the main cover 24.

An inductive charging plate 34 is fixed on a front side of the lower plate 22, near its front edge. Preferentially, the inductive charging plate 34 is in contact with an internal face of the main cover 24, in order to be easily usable through the main cover 24. The inductive charging plate 34 is electrically connected to the battery 32. The charging of the battery 32 can be operated without removing the main cover 24 thanks to the inductive charging plate 34 combined with a main cover made from a specific material.

The base module 12 includes a sensor system 35 for analyzing the environment. The control unit 30 is intended to drive the mobile robot 10 as a function of information from the sensor system 35. To this end, the control unit 30 is able to command the power of electrical motors 48, 50 that will be disclosed later.

The sensor system 35 comprises a set of six radar sensors 36, which are fixed on the lower plate 22 so that the scanned field extends on 360°. In addition to the radar sensors 36, a bidimensional scanner 38, such as a bidimensional Navigation LiDAR Sensor, is placed on the front side in such way that it scans through optical glass windows 39 arranged in the main cover 24.

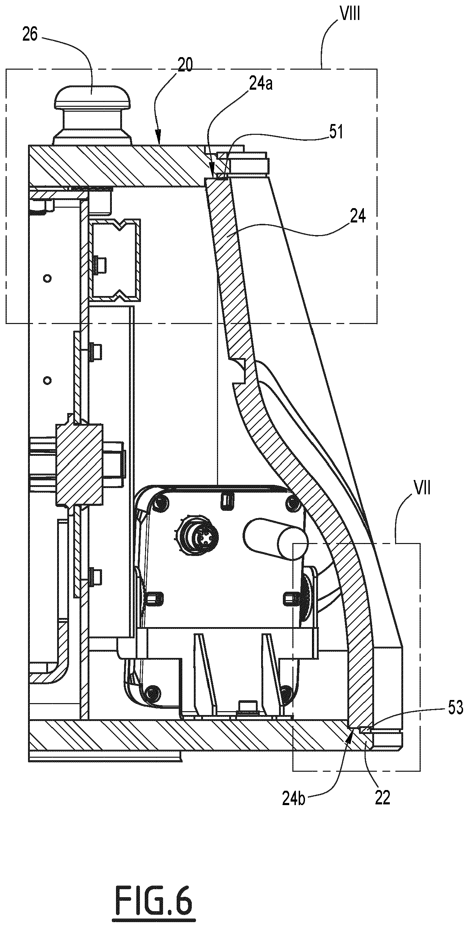

As shown on Figure 6 to Figure 8, the main cover 24 extends substantially vertically between an upper edge 24a and a lower edge 24b which are designed to respectively adjust the outlines of the upper plate 20 and the lower plate 22.

The lower edge 24b of the main cover 24 presents a horizontal first abutting surface 242b which abuts a horizontal first portion 222 of the outline of the lower plate 22 and an internal vertical abutting surface 241b which abuts a peripheral first vertical surface 221 of the outline of the lower plate 22. The first horizontal portion 222 of the outline of the lower plate 22 extends between the peripheral first vertical surface 221 of the outline of the lower plate 22 and a peripheral second vertical surface 223 of the outline of the lower plate 22. A second horizontal portion 224 of the outline of the lower plate 22 extends between the second vertical surface 223 of the outline of the lower plate 22 and the external vertical edge of the outline of the lower plate 22. The second horizontal portion 224 of the outline of the lower plate 22 is facing a second abutting surface 243b of the main cover 24, which joins the first abutting surface 242b of the main cover 24. A flat seal 53 is housed in the groove defined by the second horizontal portion 224 of the outline of the lower plate 22, the second peripheral vertical surface 223 of the outline of the lower plate 22 and the second abutting surface 243b of the main cover 24.

Advantageously, the second abutting surface 243b of the main cover 24 is inclined with respect to the second horizontal portion 224 of the outline of the lower plate 22 forming an angle α which is chosen so that the distance between the second horizontal portion 224 of the outline of the lower plate 22 and the second abutting surface 243b of the main cover 24 decreases from the second vertical surface 223 of the outline of the lower plate 22 to the external vertical edge of the outline of the lower plate 22. The thickness of the flat seal 53 is constant when it is not compressed between the second abutting surface 243b of the main cover 24 and the second horizontal portion 224 of the outline of the lower plate 22. When the main cover 24 is assembled with the lower plate 22, the flat seal 53 is gradually compressed from the inside to the outside of the base module 12. The sealing between the lower edge 24b of the main cover 24 and the lower plate 22 is achieved. The angle α is chosen between 3 and 10 degrees and preferably equal to 5 degrees.

The external surface of the base module is defined by the main cover 24, the seal external edge and the lower plate external vertical edge. The flat seal 53 is flush with both the main cover 24 and the lower plate external vertical edge.

The base module is easy to clean. This design eventually permits to cut the flat seal 53 after the main cover and the lower plate 22 have been assembled so that the external edge of the flat seal 53 is flush.

In the same way, the upper edge 24a of the main cover 24 presents a horizontal first abutting surface 242a which abuts a horizontal portion 202 of the outline of the upper plate 20 and an internal vertical abutting surface 241a which abuts a peripheral first vertical surface 201 of the outline of the upper plate 20. The first horizontal portion 202 of the outline of the upper plate 20 extends between the first vertical surface 201 of the outline of the upper plate 20 and a peripheral second vertical surface 204 of the outline of the upper plate 20. A second horizontal portion 203 of the outline of the upper plate 20 extends between the second vertical surface 203 of the outline of the upper plate 20 and the external vertical edge of the outline of the upper plate 20. The second horizontal portion 203 of the outline of the upper plate 20 is facing a second abutting surface 243a of the main cover 24, which joins the first abutting surface 242a of the main cover 24. A flat seal 51 is housed in the groove defined by the second horizontal portion 203 of the outline of the upper plate 20, the second vertical surface 204 of the outline of the upper plate 20 and the second abutting surface 243a of the main cover 24.

Advantageously, the second abutting surface 243a of the main cover 24 is inclined with respect to the second horizontal portion 203 of the outline of the upper plate 20 forming an angle α' which is chosen so that the distance between the second horizontal portion 203 of the outline of the upper plate 20 and the second abutting surface 243a of the main cover 24 decreases from the second vertical surface 204 of the outline of the upper plate 20 and the external vertical edge of the outline of the upper plate 20. The thickness of the flat seal 51 is constant when it is not compressed between the second abutting surface 243a of the main cover 24 and the second horizontal portion 203 of the outline of the upper plate 20. When the main cover 24 is assembled with the upper plate 20, the flat seal 51 is gradually compressed from the inside to the outside of the base module 12. The sealing between the upper edge 24a of the main cover 24 and the upper plate 20 is achieved. The external surface of the base module 12 is defined by the main cover 24, the seal external edge and the upper plate external vertical edge. The flat seal 51 is flush with both the main cover 24 and the upper plate external vertical edge. The base module is easy to clean. The angle α' as for the angle α is chosen between 3 and 10 degrees and preferably equal to 5 degrees.

According to an alternative solution, the first and second abutting surfaces of the edges of the main cover can be horizontal and the second portions of the outline of the lower and upper plates can be inclined with respect to the second abutting surfaces of the edges of the main cover forming an angle which is chosen so that the distance between the second horizontal portions of the outline of the lower and upper plates and the second abutting surfaces of the main cover decreases from the second peripheral vertical surfaces of the outline of the upper and lower plates to the external vertical edges of the outline of the upper and lower plates.

The upper plate 20 vertical projection is comprised in the outline of the lower plate 22 and the cover 24 presents a substantially vertical draft. This allows an efficient cleanability by vertical top-down air flow.

The plates 20, 22 and cover 24 allow an efficient protection of the internal components of the base module 12 and are easy cleanable.

The main cover 24 is preferentially made from a mixture of natural materials (bauxite), acrylic or polyester resins and pigments such as Corian^{™} produced by the company Dupont. This material resists to aggressive washing products, which eliminate bacteria and spores, and lets radar waves going through.

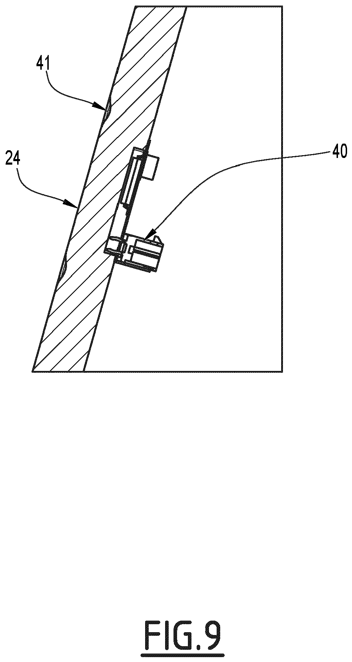

As shown on Figure 9, a magnetic switch 40 is installed on the internal surface of the main cover 24 and can be activated through the main cover 24. To this end, the main cover 24 comprises a visual marking 41 indicating the position of the magnetic switch 40. A reset button can also be installed on the internal surface of the main cover 24 and can be activated through the main cover 24.

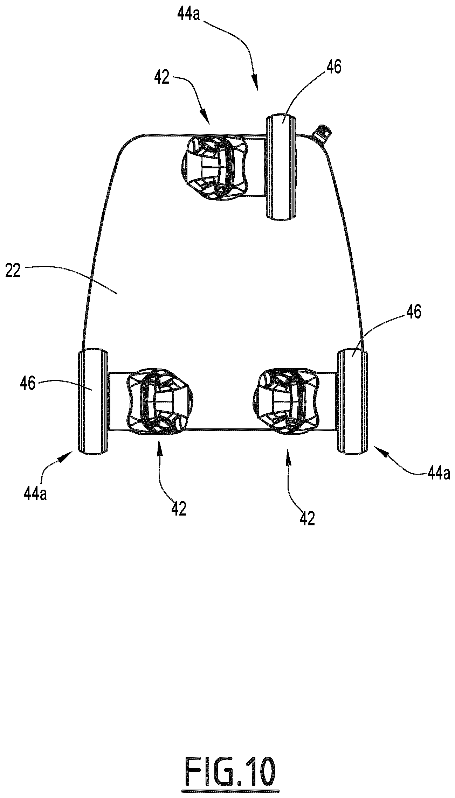

As shown on Figure 10, the lower plate 22 comprises at least three attachment points 42 each intended to receive a respective wheel unit 44. Each wheel unit 44 comprises at least one wheel 46.

The wheel units 44, and in particular the wheels 46, are entirely situated under the plane comprising the lower surface of the base module 12, which improve the cleanability of the mobile robot 10.

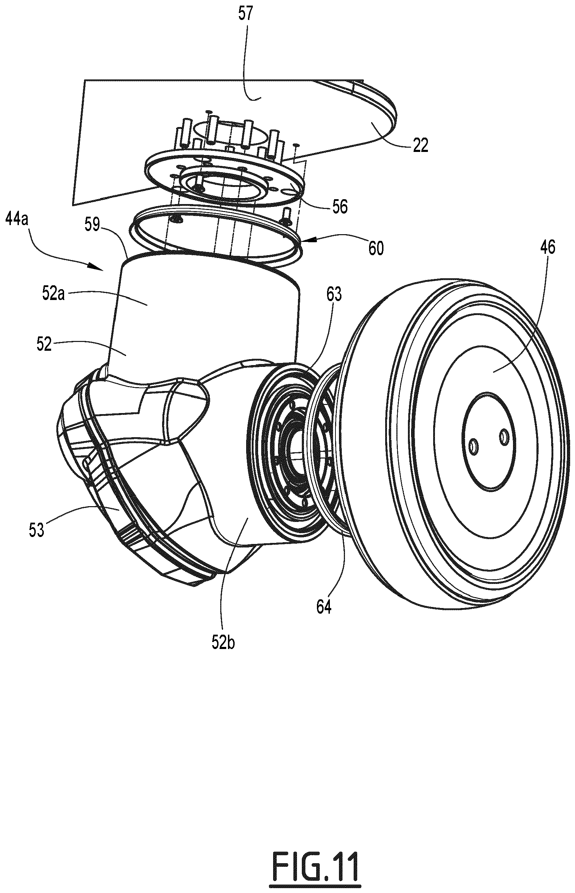

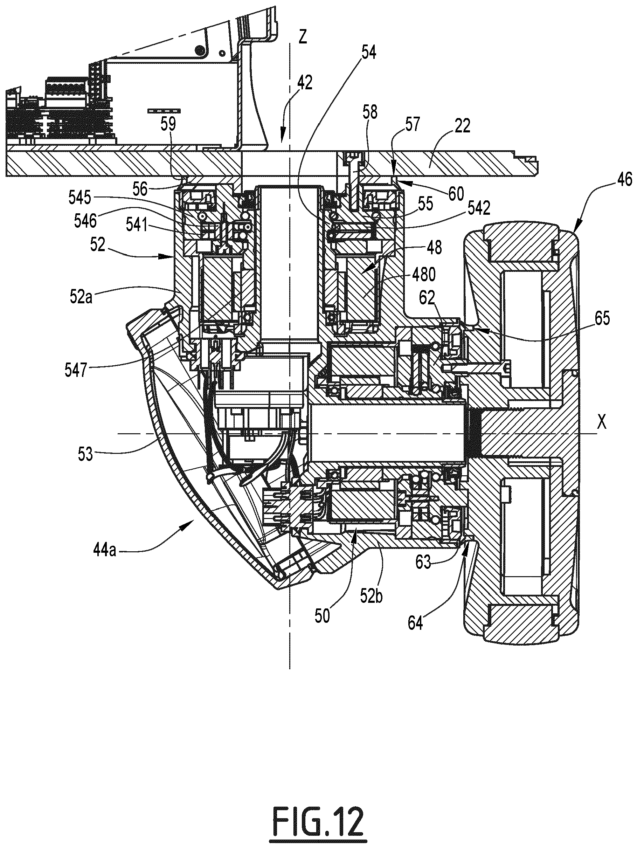

At least one of the wheel units 44 is a motorized wheel unit. For example, at least one of the wheel units 44 is a steering and driving wheel unit 44a, shown with more details on Figures 11 and 12. Each steering and driving wheel unit 44a comprises a steering motor 48 whose actuation causes the wheel 46 to turn around a vertical axis and/or a driving motor 50 whose actuation causes the wheel 46 to turn around a horizontal axis. This steering and driving wheel unit 44a comprises a housing 52, having a vertical part 52a joining a horizontal part 52b, and a cover 53 which define together a closed inner space and contains the steering motor 48 and the driving motor 50. More precisely, the vertical part 52a is cylindrical and define a vertical steering axis Z.

A vertical steering shaft 54 rotates and forms the input shaft of a reduction gear, while a steering flange 55 forms the output shaft of this reduction gear.

As shown on Figure 12, the steering shaft 54 is provided with a first and a second outer raceways, which are eccentric with respect to the steering axis Z. A first cam 541 is arranged around the first outer raceway, with the interposition of balls forming a bearing between the first outer raceway and an inner raceway of the first cam 541. The first cam 541 is annular, and its outer edge is provided with teeth, which form a set of teeth adapted to cooperate with a set of teeth provided on the inner radial surface of a fixed steering ring 545.

A second cam 542 is arranged around the second raceway with the interposition of a set of balls forming a bearing between the second raceway and an inner raceway of the second cam 542. The outer radial edge of the second cam 542 is provided with teeth, which mesh with the teeth provided on the inner radial surface of the fixed steering ring 545. The number of teeth of the steering ring 545 is slightly greater, for example by one unit, than the number of teeth of the first and second cams, which are identical.

The first cam 541 is pierced with bores whose axes are equidistant on a circle whose center coincides with the axis of rotation of the first cam about the steering axis. In the same way, the second cam 542 is pierced with the same number of bores. These bores are intended to be partially aligned and to receive together an actuating finger 546 integral with the steering flange 55 on which it is mounted by means of a screw.

The steering flange 55 is in the form of an annular plate and supported around the steering shaft Z by a set of balls arranged between an inner radial surface of the steering flange 55 and a bearing surface formed on the outer surface of the steering shaft 54 and centered on the steering axis Z. A second set of balls is interposed between an outer radial surface of the steering flange 55 and a corresponding bearing surface of the steering ring 545.

The steering motor 48 is a brushless electrical motor with magnets 547 integral with the steering shaft 54 and a stator 480 comprising coils and magnetic sheets. The coils are connected to electrical cables which are advantageously passed through a tube which extends along the steering axis Z and are connected to the drive unit 30 located inside the base module 12. The electrical cables also contain electrical wires for transmitting the angular position of the steering shaft, which is given by an encoder.

The wheel unit 44 is connected to the lower plate 22 on the attachment point 42, which presents an attachment hole centered on the steering axis Z and an adapter plate 56 screwed on the lower surface of the base module 12. A set of screws 58 assemble the lower plate 22, the adapter plate 56 and the steering flange 55 together.

As the electrical cables are connected to powering means controlled by the control unit 30 according to the target and the environment, the steering and driving unit 44a can be rotated around a steering axis Z. When the coils of the stator are empowered, they cause the steering shaft 54 to rotate and drive the first and second cams, which apply a torque on the steering flange 55 by the actuating fingers 546. As a result of this torque, the steering and driving wheel unit turns with regards to the lower plate 22.

The adapter plate 56 is like a thin washer. A lip seal 60 comprising an annular body which is mounted on the outer cylindrical edge of the adapter plate 56 and a lip extending from the annular body provides a dynamic sealing between an annular surface 57 of the lower plate 22 and a circular edge 59 of the vertical part 52a of the steering and driving wheel unit 44a. The annular body of the lip seal 60 abuts against an annular surface 57 of the lower plate 22 which is oriented towards the ground and the lip of the lip seal 60 cooperates in tight manner with the circular edge 59 of the vertical section of the steering and driving wheel unit 44a which is oriented towards the lower plate 22. The lip seal 60 provides a sealing between the annular surface 57 of the lower plate 22 and a circular edge 59 of the vertical section 52b of the steering and driving wheel unit 44a. Advantageously, the lip of the lip seal 60 extends externally from the annular body of the lip seal 60 defining a concave external surface. This improves the cleanability of the mobile robot 10. The driving motor 50 is located in the horizontal part 52b of the steering and driving unit 44a. The design is similar to the steering motor 48. The wheel 46 is screwed on a driving flange 62. A lip seal 64 is mounted between an annular part 65 of the wheel 46 and a circular edge 63 of the horizontal part 52b to provide dynamic sealing.

Since the wheel 46 is connected on one side to the horizontal part 52b, the other side of the wheel 46 is free from encumbrance and thus easy to clean.

The mobile robot 10 is designed to be able to perform different types of tasks by changing the add-on module, which is removably mechanically and electrically connected on the upper plate 20 of the base module 12. The add-on module 14 presents an add-on lower plate 66, which fits the outline of the base module upper plate 20.

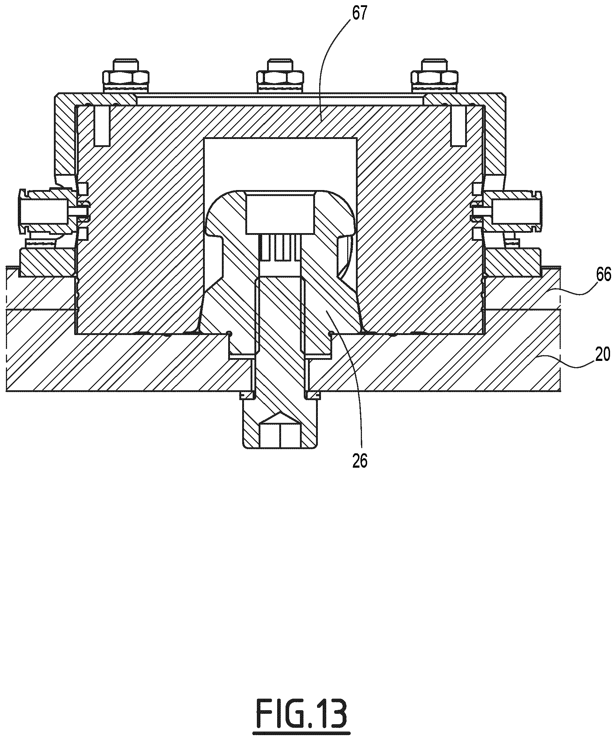

As shown on Figure 13, the add-on module 14 comprises, for each plug 26, a complementary socket 67 attached to the add-on lower plate 66 and able to lock and unlock the plug. The plugs 26 and the sockets 67 form together three mechanical locking devices intended to center and to clamp the add-on module 14 on the base module 12. For example, the locking devices are zero-point clamping Systems NSE3 99 from the company "SCHUNK SE & Co. KG". The clamping force guarantees a compression of the flat sealing, which runs along the outline of the base module upper plate 20. Consequently, the connection between add-on module 14 and base module 12 is sealed and hygienic, thus the sensitivity to pollution is reduced.

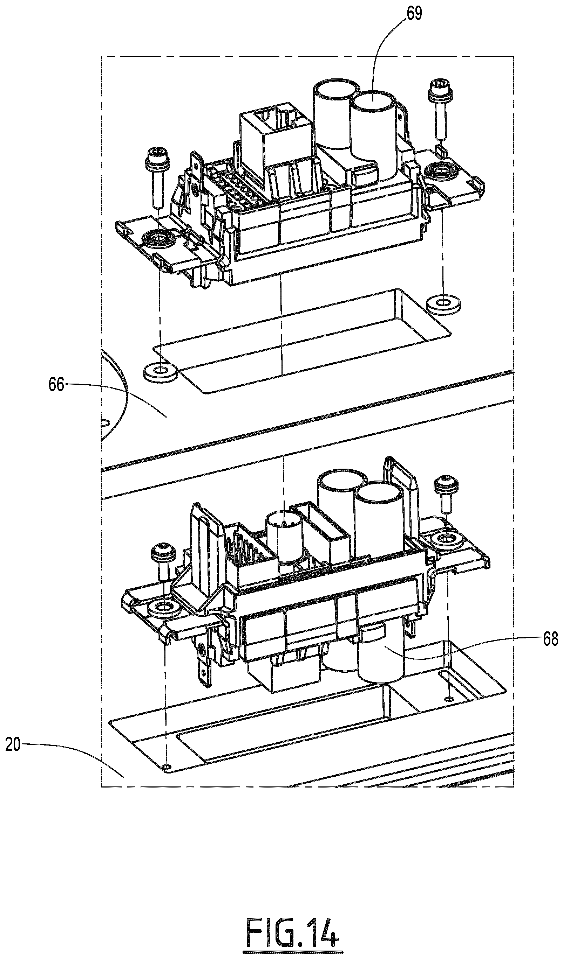

In addition to mechanical connection, an electrical connection is achieved with configurable connectors 68, 69, for example CombiTac^{™} from the company Stäubli. As shown on Figure 14, a first connector 68 is arranged on the upper plate 20, and a complementary second connector 69 is arranged on the add-on lower plate 66.

The connectors 68, 69 are preferentially arranged near the rear side of the mobile robot 10, as shown on Figure 3, for example near one of the rear plugs 26.

The add-on module 14 can be powered and also controlled by the base module 12, in particular by the control unit 30.

The first add-on module 14 is equipped with the robot arm 16 whose controller is located inside the add-on module 14. Alternatively, as shown on Figure 2, an alternative add-on module 14b can be single basket having a surface 15 for receiving parts. The lower surface 66b of this alternative add-on module 14b is the same as the add-on module 14.

Since the mobile robot 10 functional structure is modularized, the add-on modules 14, 14b with different functions can be switched, and the working efficiency is improved.

In the first embodiment, disclosed on Figures 1 to 14, the three wheel units 44 are steering and driving wheel units 44a. This first embodiment provides the highest maneuverability to the mobile robot 10. In particular, as each steering and driving wheel unit 44a can be rotated around a vertical axis with respect to the base module 12, the mobile robot 10 can follow a broken path completely changing direction at one point of its trajectory.

It should be noticed that, since the motors 48, 50 are arranged in the wheel unit 44a and not in the base module 12, the base module 12 is more compact and can be the same for every combination of wheel units 44. Thus, we can define other embodiments by changing the wheel units. Several other embodiments will be disclosed hereafter. The identical parts as in the first embodiment will not be repeated. The similar parts will be designed with the same reference number as in the first embodiment.

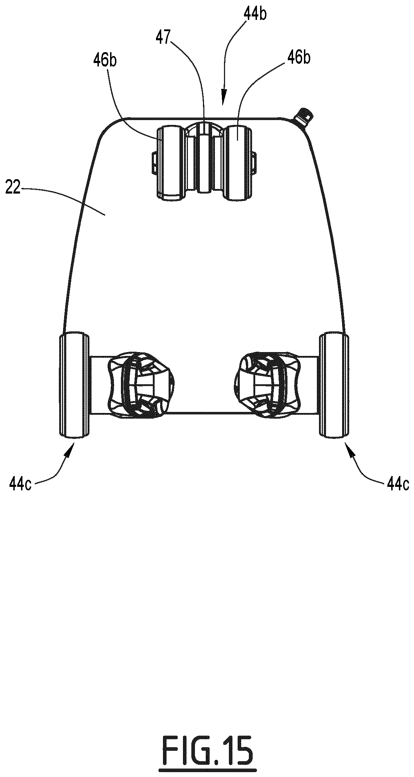

In a second embodiment, shown on Figure 15, the front wheel unit which is attached to the front attachment point is a free caster unit 44b and the rear left wheel unit and the rear right wheel unit which are respectively attached to the rear left attachment point and the rear right attachment point are motorized wheel units, more particularly driving wheel units 44c.

A driving wheel unit 44c is similar to a driving and steering unit 44a but does not incorporate a steering motor. The vertical part 52a of the housing 52 is rigidly fixed on an attachment point 42 of the lower plate 22. The wheel 46 of a driving wheel unit 44c cannot rotate around a vertical axis with respect to the base module 12.

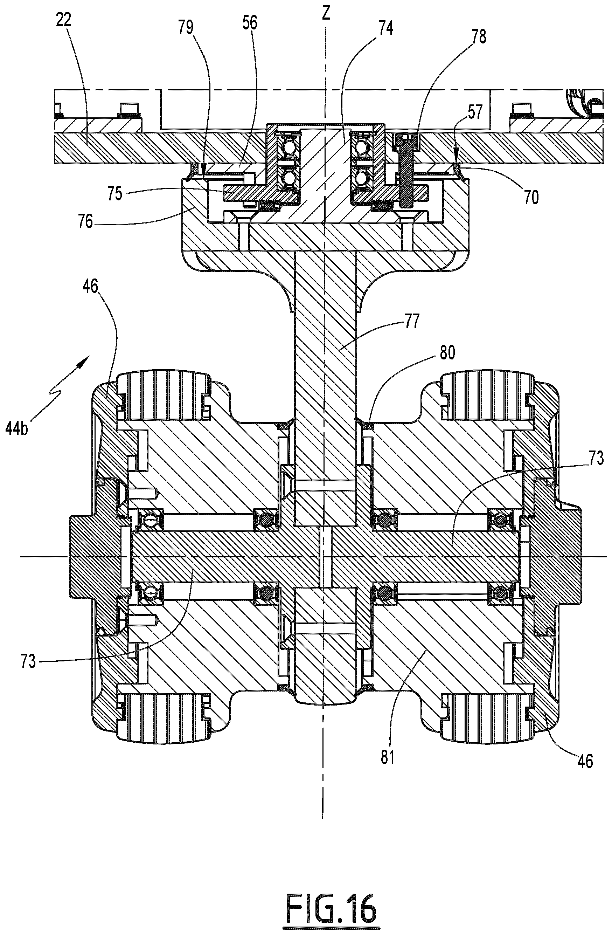

As shown on Figure 16, the free caster wheel unit 44b is connected to the lower plate 22 on the attachment point 42, which presents an attachment hole centered on the steering axis Z and an adapter plate 56 screwed on the lower surface of the base module 12. A set of screws 78 assemble the lower plate 22, the adapter plate 56 and a steering flange 75 together. The steering flange 75 comprises two ball bearings whose inner ring is mounted on the shaft 74 of the free caster wheel unit 44b. In addition to the two ball bearings, an additional trust bearing supports the vertical load applied by the base module 12. The shaft 74 is screwed to a cylindrical cup 76, which has a horizontal circular edge 79 facing the lower plate 22.

A lip seal 70 comprising an annular body which is mounted on the outer cylindrical edge of the adapter plate 56 and a lip extending from the annular body provides a dynamic sealing between an annular surface 57 of the lower plate 22 and the circular edge 79 of the cup 76. The annular body of the lip seal 70 abuts against an annular surface 57 of the lower plate 22, which is oriented towards the ground, and the lip of the lip seal 70 cooperates in tight manner with the circular edge 79 of the cup 76, which is oriented towards the lower plate 22. Advantageously, the lip of the lip seal 70 extends externally from the annular body of the leap seal 60 defining a concave external surface. This improves the cleanability of the mobile robot 10 as for the sealing of the steering and driving unit 44a.

A plate 77 extends along the steering axis Z from the cup 76. Two horizontal hubs 73 are fixed on each side of the plate 77 and support bearings, which articulate two symmetrical wheels 46. A lip seal 80 is mounted between an annular part 80 of the wheel 46 and a lateral face of the plate to provide dynamic sealing.

Since the wheel 46 is connected on one side to the plate 77, the other side of the wheel 46 is free from encumbrance and thus easy to clean.

This second embodiment is cheaper than the first embodiment, but still provides a high maneuverability. The base module 12 moves in straight line when the driving motors of the driving wheel units 44c turn at the same speed in the same direction. The base module 12 turns when the driving motors of the driving wheel unit 44c turn at different speeds or in opposite directions.

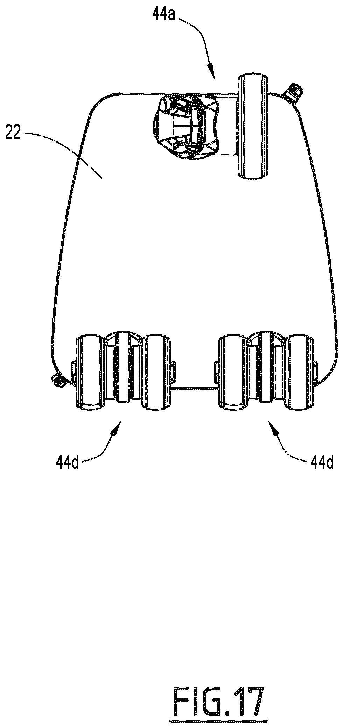

In a third embodiment, shown on Figure 17, the front wheel unit which is attached to the front attachment point is a driving and steering unit 44a and the rear left wheel unit and the rear right wheel unit which are respectively attached to the rear left attachment point and the rear right attachment point are fixed caster wheel units 44d. The wheels 46 of a fixed caster wheel unit 44d cannot rotate around a vertical axis with respect to the base module 12. This third embodiment is the cheapest solution, since it requires the same number of motors than the second embodiment, but only one housing for the two motors and an easier software handling. It should be noticed that the invention is not limited to described embodiments. In particular, the described embodiments show three wheel units, but the mobile robot 10 could comprise four wheel units or more.

Besides, the disclosed steering and driving wheel unit 44a has only one wheel 46 but could have in a variant two such as the free caster unit 44b.

## Claims

1. A mobile robot (10) comprising a base module (12) including a sensor system (35) for analyzing the environment, and a control unit (30) for driving the mobile robot (10) as a function of information from the sensor system (35), the modular mobile robot (10) being **characterized in that**:
- the base module (12) comprises a lower plate (22) facing the ground and comprising at least three attachment points (42), each attachment point (42) being designed to connect with a respective wheel unit (44), each wheel unit (44) comprising at least one wheel (46),
- at least one of the wheel units (44) is a motorized wheel unit (44a; 44c) which comprises at least one motor (48, 50) whose actuation causes the wheel (46) to turn around a vertical axis (Z) and/or a horizontal axis (X),
- each motor (48, 50) is controlled by the control unit (30) as a function of information from the sensor system (35).

2. The mobile robot (10) according to claim 1, wherein the base module (12) has a lower surface that is flat, and the wheels (46) of the wheel units (44) are entirely situated under a plane comprising the lower surface of the base module (12).

3. The mobile robot (10) according to claim 1 or 2, wherein each motorized wheel unit (44a) has a housing (52) with a vertical part (52a) joining a horizontal part (52b) and a cover (53), defining together a closed inner space containing at least one motor, in particular a steering motor (48) and/or a driving motor (50).

4. The mobile robot (10) according to claim 3, wherein each motorized wheel unit (44a; 44c) is connected to the lower surface of the base module (12) on one respective of the attachment points (42), this attachment point (42) comprising a lip seal (60) which provides a seal between an annular surface (57) of the lower plate (22) and a circular edge (59) of the vertical part (52a) of the motorized wheel unit (44a; 44c).

5. The mobile robot (10) according to claim 4, wherein the lip seal (60) comprises an annular body which abuts against the annular surface (57) of the lower plate (22) and a lip extending externally from the annular body of the lip seal (60) defining a concave external surface.

6. The mobile robot (10) according to any of claims 3 to 5, wherein each motorized wheel unit (44a; 44c) has a wheel (46) which is connected at the extremity of the horizontal part (52b) and has a lip seal (64) which provides a seal between an annular surface (65) of a side of the wheel (46) and a circular edge (63) of the horizontal part (52b) of the motorized wheel unit (44a; 44c).

7. The mobile robot (10) according to any of claims 1 to 6, wherein the attachment points (42) comprise a front attachment point, a rear left attachment point and a rear right attachment point located at the corners of a triangle, and each wheel unit (44) is a steering and driving wheel units (44a).

8. The mobile robot (10) according to any of claims 1 to 6, wherein the attachment points (42) comprise a front attachment point, a rear left attachment point and a rear right attachment point located at the corners of a triangle, and the wheel units (44) comprise a front wheel unit which is attached to the front attachment point, and a rear left wheel unit and a rear right wheel unit which are respectively attached to the rear left attachment point and the rear right attachment point, the front wheel unit being a free caster wheel unit (44b) and the rear left and right wheel units being driving wheel units (44c).

9. The mobile robot (10) according to claim 8, wherein the free caster wheel unit (44b) comprises a shaft (74) for rotating around a vertical axis (Z) with respect to the lower plate (22) and fixed to a cup (76), the free caster wheel unit (44b) being connected to the lower surface of the base module (12) on one of the attachment points (42), this attachment point (42) comprising a lip seal (70) which provides a seal between an annular surface (57) of the lower plate (22) and a circular edge (79) of the cup (76).

10. The mobile robot (10) according to any claims 1 to 6, wherein the attachment points (42) comprise a front attachment point, a rear left attachment point and a rear right attachment point located at the corners of a triangle, and the wheel units (44) comprise a front wheel unit which is attached to the front attachment point, and a rear left wheel unit and a rear right wheel unit which are respectively attached to the rear left attachment point and the rear right attachment point, the front wheel unit being a steering and driving wheel unit (44a) and the rear left wheel unit and the rear right wheel unit being fixed caster wheel units (44d).

11. The mobile robot (10) according to any of the preceding claims, comprising an add-on module (14, 14') used for completing specified working tasks and detachably connected to the upper surface (20) of the base module (12) by selectively activable mechanical connection devices (26, 67).

12. The mobile robot (10) according to claim 11, wherein each mechanical connection device comprises a plug (26) extending above the upper surface of the base module (12) and a socket part (67) attached to the add-on module (14, 14') and able to lock and unlock the plug (26).

13. The mobile robot (10) according to claim 11 or 12, wherein, in addition to mechanical connection devices, the add-on module (14, 14') and the base module (12) are electrically connected by an electrical connection device comprising a connector (68) integral with the base module (12) and a complementary second connector (69) integral with the add-on module (14, 14').

14. The mobile robot (10) according to any of preceding claims, wherein the lower plate (22) is flat, and the base module (12) comprises a flat upper plate (20) and a main cover (24) joining the upper plate (20) to the lower plate (22), the main cover (24) having an upper edge (24a) and a lower edge (24b) respectively abutting an outer outline of the upper plate (20) and the lower plate (22) against a respective flat seal (51, 53) whose lateral external edge follows an outer contour of the respective upper plate (20) and lower plate (22).

15. The mobile robot (10) according to claim 14 wherein the lower edge (24b) of the main cover (24) presents a horizontal first abutting surface (242b) which abuts a horizontal first portion (222) of the outline of the lower plate (22) and an internal vertical abutting surface (241b) which abuts a peripheral first vertical surface (221) of the outline of the lower plate (22), the first horizontal portion (222) of the outline of the lower plate (22) extending between the peripheral first vertical surface (221) of the outline of the lower plate (22) and a peripheral second vertical surface (223) of the outline of the lower plate (22), a second horizontal portion (224) of the outline of the lower plate (22) extending between the second vertical surface (223) of the outline of the lower plate (22) and the external vertical edge of the outline of the lower plate (22) and facing a second abutting surface (243b) of the main cover (24) which joins the first abutting surface (242b) of the main cover (24), a flat seal (53) being housed in the groove defined by the second horizontal portion (224) of the outline of the lower plate (22), the second peripheral vertical surface (223) of the outline of the lower plate (22) and the second abutting surface (243b) of the main cover (24).

16. The mobile robot (10) according to claim 14 or 15 wherein the upper edge (24a) of the main cover (24) presents a horizontal first abutting surface (242a) which abuts a horizontal first portion (202) of the outline of the upper plate (20) and an internal vertical abutting surface (241a) which abuts a peripheral first vertical surface (201) of the outline of the upper plate (20), the first horizontal portion (202) of the outline of the upper plate (20) extending between the peripheral first vertical surface (201) of the outline of the upper plate (20) and a peripheral second vertical surface (204) of the outline of the upper plate (20), a second horizontal portion (203) of the outline of the upper plate (20) extending between the second vertical surface (204) of the outline of the lower plate (20) and the external vertical edge of the outline of the upper plate (20) and facing a second abutting surface (243a) of the main cover (24) which joins the first abutting surface (242a) of the main cover (24), a flat seal (51) being housed in the groove defined by the second horizontal portion (203) of the outline of the upper plate (20), the second peripheral vertical surface (204) of the outline of the upper plate (20) and the second abutting surface (243a) of the main cover (24).

17. The mobile robot (10) according to claim 15 or 16 wherein each second abutting surface (243a, 243b) of the main cover (24) is inclined with respect to corresponding second horizontal portion (203, 224) of the outline of the corresponding plate (20, 22) forming an angle (α, α') which is chosen so that the distance between the second horizontal portion (203, 224) of the outline of the corresponding plate (20, 22) and the second abutting surface (243a, 243b) of the main cover (24) decreases from the second vertical surface (203, 223) of the outline of the corresponding plate (20, 22) to the external vertical edge of the outline of the corresponding plate (20, 22).

18. The mobile robot (10) according to any of claims 14 to 17, wherein the main cover (24) of the base module (12) is made from a mixture of natural materials, acrylic or polyester resins and pigments.

19. The mobile robot (10) according to any of claims 14 to 18, wherein the lower (22) and upper (20) plates each has a trapezoidal outline having a front side parallel to a rear side of greater length, a left side joining two ends of the front and rear sides and a symmetrical right side.

20. The mobile robot (10) according to any of claims 14 to 19, wherein the upper plate (20) vertical projection is comprised in the outline of the lower plate (22) and the cover (24) presents a substantially vertical draft.

21. The mobile robot (10) according to any of claims 14 to 20, wherein the lower plate (22), the upper plate (20) and the main cover (24) of the base module define an inner volume, which contains:
- inductive charging means (34) which allow the charging of a battery (32) though the main cover (24),
- radar sensor systems (36) for a 360°safety cover,
- a bidimensional Navigation LiDAR Sensor (38) sensing environment through windows (39) of the main cover (24),
- at least one magnetic switch (40) which is placed close to the cover (24) with an indication (41) readable from the outside.

## Amended claims

### Amended claims in accordance with Rule 137(2) EPC.

1. A mobile robot (10) comprising a base module (12) including a sensor system (35) for analyzing the environment, and a control unit (30) for driving the mobile robot (10) as a function of information from the sensor system (35), the modular mobile robot (10) being **characterized in that**:
- the base module (12) comprises a lower plate (22) facing the ground and comprising three attachment points (42), each attachment point (42) being designed to connect with a respective wheel unit (44), each wheel unit (44) comprising at least one wheel (46),
- at least one of the wheel units (44) is a motorized wheel unit (44a; 44c) which comprises at least one motor (48, 50) whose actuation causes the wheel (46) to turn around a vertical axis (Z) and/or a horizontal axis (X),
- each motor (48, 50) is controlled by the control unit (30) as a function of information from the sensor system (35),
- the attachment points (42) comprise a front attachment point, a rear left attachment point and a rear right attachment point located at the corners of a triangle, and:
* each wheel unit (44) is a steering and driving wheel units (44a), or
* the wheel units (44) comprise a front wheel unit which is attached to the front attachment point, and a rear left wheel unit and a rear right wheel unit which are respectively attached to the rear left attachment point and the rear right attachment point, the front wheel unit being a free caster wheel unit (44b) and the rear left and right wheel units being driving wheel units (44c).

2. The mobile robot (10) according to claim 1, wherein the base module (12) has a lower surface that is flat, and the wheels (46) of the wheel units (44) are entirely situated under a plane comprising the lower surface of the base module (12).

3. The mobile robot (10) according to claim 1 or 2, wherein each motorized wheel unit (44a) has a housing (52) with a vertical part (52a) joining a horizontal part (52b) and a cover (53), defining together a closed inner space containing at least one motor, in particular a steering motor (48) and/or a driving motor (50).

4. The mobile robot (10) according to claim 3, wherein each motorized wheel unit (44a;
44c) is connected to the lower surface of the base module (12) on one respective of the attachment points (42), this attachment point (42) comprising a lip seal (60) which provides a seal between an annular surface (57) of the lower plate (22) and a circular edge (59) of the vertical part (52a) of the motorized wheel unit (44a; 44c).

5. The mobile robot (10) according to claim 4, wherein the lip seal (60) comprises an annular body which abuts against the annular surface (57) of the lower plate (22) and a lip extending externally from the annular body of the lip seal (60) defining a concave external surface.

6. The mobile robot (10) according to any of claims 3 to 5, wherein each motorized wheel unit (44a; 44c) has a wheel (46) which is connected at the extremity of the horizontal part (52b) and has a lip seal (64) which provides a seal between an annular surface (65) of a side of the wheel (46) and a circular edge (63) of the horizontal part (52b) of the motorized wheel unit (44a; 44c).

7. The mobile robot (10) according to any of preceding claims, wherein the free caster wheel unit (44b) comprises a shaft (74) for rotating around a vertical axis (Z) with respect to the lower plate (22) and fixed to a cup (76), the free caster wheel unit (44b) being connected to the lower surface of the base module (12) on one of the attachment points (42), this attachment point (42) comprising a lip seal (70) which provides a seal between an annular surface (57) of the lower plate (22) and a circular edge (79) of the cup (76).

8. The mobile robot (10) according to any of the preceding claims, comprising an add-on module (14, 14') used for completing specified working tasks and detachably connected to the upper surface (20) of the base module (12) by selectively activable mechanical connection devices (26, 67).

9. The mobile robot (10) according to claim 8, wherein each mechanical connection device comprises a plug (26) extending above the upper surface of the base module (12) and a socket part (67) attached to the add-on module (14, 14') and able to lock and unlock the plug (26).

10. The mobile robot (10) according to claim 8 or 9, wherein, in addition to mechanical connection devices, the add-on module (14, 14') and the base module (12) are electrically connected by an electrical connection device comprising a connector (68) integral with the base module (12) and a complementary second connector (69) integral with the add-on module (14, 14').

11. The mobile robot (10) according to any of preceding claims, wherein the lower plate (22) is flat, and the base module (12) comprises a flat upper plate (20) and a main cover (24) joining the upper plate (20) to the lower plate (22), the main cover (24) having an upper edge (24a) and a lower edge (24b) respectively abutting an outer outline of the upper plate (20) and the lower plate (22) against a respective flat seal (51, 53) whose lateral external edge follows an outer contour of the respective upper plate (20) and lower plate (22).

12. The mobile robot (10) according to claim 11 wherein the lower edge (24b) of the main cover (24) presents a horizontal first abutting surface (242b) which abuts a horizontal first portion (222) of the outline of the lower plate (22) and an internal vertical abutting surface (241b) which abuts a peripheral first vertical surface (221) of the outline of the lower plate (22), the first horizontal portion (222) of the outline of the lower plate (22) extending between the peripheral first vertical surface (221) of the outline of the lower plate (22) and a peripheral second vertical surface (223) of the outline of the lower plate (22), a second horizontal portion (224) of the outline of the lower plate (22) extending between the second vertical surface (223) of the outline of the lower plate (22) and the external vertical edge of the outline of the lower plate (22) and facing a second abutting surface (243b) of the main cover (24) which joins the first abutting surface (242b) of the main cover (24), a flat seal (53) being housed in the groove defined by the second horizontal portion (224) of the outline of the lower plate (22), the second peripheral vertical surface (223) of the outline of the lower plate (22) and the second abutting surface (243b) of the main cover (24).

13. The mobile robot (10) according to claim 11 or 12 wherein the upper edge (24a) of the main cover (24) presents a horizontal first abutting surface (242a) which abuts a horizontal first portion (202) of the outline of the upper plate (20) and an internal vertical abutting surface (241a) which abuts a peripheral first vertical surface (201) of the outline of the upper plate (20), the first horizontal portion (202) of the outline of the upper plate (20) extending between the peripheral first vertical surface (201) of the outline of the upper plate (20) and a peripheral second vertical surface (204) of the outline of the upper plate (20), a second horizontal portion (203) of the outline of the upper plate (20) extending between the second vertical surface (204) of the outline of the lower plate (20) and the external vertical edge of the outline of the upper plate (20) and facing a second abutting surface (243a) of the main cover (24) which joins the first abutting surface (242a) of the main cover (24), a flat seal (51) being housed in the groove defined by the second horizontal portion (203) of the outline of the upper plate (20), the second peripheral vertical surface (204) of the outline of the upper plate (20) and the second abutting surface (243a) of the main cover (24).

14. The mobile robot (10) according to claim 12 or 13 wherein each second abutting surface (243a, 243b) of the main cover (24) is inclined with respect to corresponding second horizontal portion (203, 224) of the outline of the corresponding plate (20, 22) forming an angle (α, α') which is chosen so that the distance between the second horizontal portion (203, 224) of the outline of the corresponding plate (20, 22) and the second abutting surface (243a, 243b) of the main cover (24) decreases from the second vertical surface (203, 223) of the outline of the corresponding plate (20, 22) to the external vertical edge of the outline of the corresponding plate (20, 22).

15. The mobile robot (10) according to any of claims 11 to 14, wherein the main cover (24) of the base module (12) is made from a mixture of natural materials, acrylic or polyester resins and pigments.

16. The mobile robot (10) according to any of claims 11 to 15, wherein the lower (22) and upper (20) plates each has a trapezoidal outline having a front side parallel to a rear side of greater length, a left side joining two ends of the front and rear sides and a symmetrical right side.

17. The mobile robot (10) according to any of claims 11 to 16, wherein the upper plate (20) vertical projection is comprised in the outline of the lower plate (22) and the cover (24) presents a substantially vertical draft.

18. The mobile robot (10) according to any of claims 11 to 17, wherein the lower plate (22), the upper plate (20) and the main cover (24) of the base module define an inner volume, which contains:
- inductive charging means (34) which allow the charging of a battery (32) though the main cover (24),
- radar sensor systems (36) for a 360°safety cover,
- a bidimensional Navigation LiDAR Sensor (38) sensing environment through windows (39) of the main cover (24),
- at least one magnetic switch (40) which is placed close to the cover (24) with an indication (41) readable from the outside.
